(19) **Europäisches Patentamt / European Patent Office / Office européen des brevets**

(11) **EP 2 101 291 A1**

(12) **EUROPEAN PATENT APPLICATION**

(43) Date of publication:
**16.09.2009 Bulletin 2009/38**

(51) Int Cl.:
***G06Q 10/00*** (2006.01)

(21) Application number: **09003490.1**

(22) Date of filing: **10.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | • **Berchtold, Martin**<br>**69190 Walldorf (DE)**<br>• **Decker, Christian**<br>**69190 Walldorf (DE)**<br>• **Riedel, Till**<br>**69190 Walldorf (DE)** |
| (30) Priority: **11.03.2008 US 46371** | (74) Representative: **Müller-Boré & Partner**<br>**Patentanwälte**<br>**Grafinger Strasse 2**<br>**81671 München (DE)** |
| (71) Applicant: **SAP AG**<br>**69190 Walldorf (DE)** | |
| (72) Inventors:<br>• **F. Chaves, Leonardo, Weiss**<br>**69190 Walldorf (DE)** | |

(54) **Enhanced item tracking using selective querying**

(57) Enhanced item tracking using selecting querying, in which a scan envelope of a mobile reader is defined, items expected within the defined scan envelope are determined, and a low-level query including a tuning parameter that selectively includes or excludes the determined items is generated. The approach also includes transmitting the low-level query via the mobile reader, and outputting an indicia of items that respond to the low-level query.

FIG. 1A

EP 2 101 291 A1

**Description**

FIELD

The present disclosure generally relates to reading RFID tags.

BACKGROUND

Radio Frequency IDentification (RFID) technology is used as an automatic identification method, relying on storing and remotely retrieving data using devices called RFID tags or transponders. For example, an RFID tag may be attached to (or incorporated into) an object such as a product, animal or person for the purpose of identification using radio waves. Some RFID tags may be read from several meters away and beyond the line of sight of the reader. A significant thrust in RFID use is in enterprise supply chain management, improving the efficiency of inventory tracking and management. For example, Enterprise Resource Planning (ERP) systems may use RFID technology to track inventory in stores, warehouses, or other locations.

SUMMARY

According to one general implementation, an RFID device is adjusted to selectively query those items known to be within range of the device, or to perform a more general query of objects within the range except for those known items. Such selective querying may be based on performing a high-level query at an enterprise resource system, for example to determine which items or products are expected at a given location.

In doing so, it is possible to reduce the number of irrelevant or incidental query responses, and to thereby increase computational effectiveness of an associated system. As this approach may reduce the amount of filtering that would otherwise be required to process relevant query responses, selective querying may be useful in a variety of business contexts, including the retail context.

According to another general implementation, a computer-implemented process includes defining a scan envelope of a mobile reader, determining, based on performing a high-level query at a resource planning module, items expected within the defined scan envelope, and generating a low-level query including a tuning parameter that selectively includes or excludes the determined items. The process also includes transmitting the low-level query via the mobile reader, and outputting an indicia of items that respond to the low-level query.

Implementations may include one or more of the following features. For instance, the scan envelope may be defined based on determining a absolute or relative location and scanning direction of the mobile reader. The location of the mobile reader may be determined using Active Bat, Cricket, an infrared cell-of-origin system, a radio beacon, or an active or passive RFID device. The indicia may further include a quantity of the items that respond to the low-level query, or a unique identifier of each of the items that responds to the low-level query.

In further examples, the process also includes determining, based on a tuning parameter that selectively excludes the determined items and further based on the output indicia, whether a plan-o-gram is satisfied, or generating, based on a tuning parameter that selectively includes the determined items and further based on the output indicia, an inventory of the items that respond to the low-level query. Outputting the indicia may further include transmitting the indicia to a back-end enterprise resource planning system. Outputting the indicia may further include updating, using the indicia, a database disposed on the mobile reader. The mobile reader may be a mobile RFID device, and the low-level query may be formatted according to the EPC Gen 2 standard. The low-level query may further include a frame length parameter, generated based on a quantity of the items expected within the defined scan envelope. The process may also include iteratively modifying the frame length parameter based on a quantity of the items that respond to the low-level query.

In further examples, determining the items expected within the defined scan envelope may further include transmitting, from the mobile device and to a resource planning module, a parameter that describes the defined scan envelope, generating, at the resource planning module, the high-level query, the high-level query further including the transmitted parameter, performing the high-level query at the resource planning module, and receiving, at the mobile device and from the resource planning module, a response to the high-level query, the response including the items expected within the defined scan envelope. Additionally, determining the items expected within the defined scan envelope may further include performing the high-level query at the resource planning module, iteratively receiving, at the mobile device and from the resource planning module, a response to the high-level query, the response including items expected within a plurality of locations, and determining, at the mobile reader and based on comparing the items expected within the plurality of locations with the defined scan envelope, the items expected within the defined scan envelope.

Moreover, in other examples, determining the items expected within the defined scan envelope may further include transmitting, from the mobile reader to the resource planning module and based on receiving a request, data indicative of the defined scan envelope, performing the high-level query at the resource planning module, and receiving, at the mobile reader and based on performing the high-level query, data indicative of the items expected within the defined scan envelope. Additionally, determining the items expected within the defined scan envelope may include performing the high-level query at the resource planning module, receiving, at the mobile reader and from the resource planning module and based on performing the high-level query, a list of items expected within a plurality of locations, and determining, at the mobile reader and based on comparing the list of items expected within the plurality of locations with the defined scan envelope, the items expected within the defined scan envelope.

In additional examples, outputting the indicia may further include displaying the indicia to a user. The process may include detecting an out-of-stock condition based on the output indicia. Defining the scan envelope may further include determining a retail shelf at least partially disposed within the scan envelope. The process may also include receiving, from a back-end enterprise resource planning system, an inventory list, where outputting the indicia of items that respond to the low-level query further includes updating the inventory list with the indicia.

In another general implementation, a computer program product is tangibly embodied in a machine-readable medium. The computer program product includes instructions that, when read by a machine, operate to cause data processing apparatus to define a scan envelope of a mobile reader, to determine, based on performing a high-level query at a resource planning module, items expected within the defined scan envelope, and to generate a low-level query including a tuning parameter that selectively includes or excludes the determined items. The computer program product also includes instructions that, when ready by a machine, operate to cause data processing apparatus to transmit the low-level query via the mobile reader, and to output an indicia of items that respond to the low-level query.

According to a further general implementation, a system includes a processor and an output module. The processor is configured to define a scan envelope of a mobile reader, to determine, based on performing a high-level query at a resource planning module, items expected within the defined scan envelope, and to generate a low-level query including a tuning parameter that selectively includes or excludes the determined items. The output module is configured to transmit the low-level query via the mobile reader, and to output an indicia of items that respond to the low-level query. The system may also include a shopping cart upon which the processor and output module are mounted.

The details of one or more implementations are set forth in the accompanying drawings and the description below. Other features and advantages of the disclosure will be apparent from the description and drawings, and from the claims.

BRIEF DESCRIPTION OF THE DRAWINGS

FIGS. 1 and 2 are contextual diagrams depicting the operation of an exemplary system
FIGS. 3, 5, 8 and 9 illustrate of exemplary systems.
FIGS. 4 and 7 illustrate exemplary processes.
FIG. 6 is a block diagram showing an exemplary automation protocol.
Like reference numbers represent corresponding parts throughout.

DETAILED DESCRIPTION

According to one general implementation, an RFID device is adjusted to selectively query those items known to be within range of the device, or to perform a more general query of objects within the range except for those known items. Such selective querying may be based on performing a high-level query at an enterprise resource system, for example to determine which items or products are expected at a given location.

In doing so, it is possible to reduce the number of irrelevant or incidental query responses, and to thereby increase computational effectiveness of an associated system. As this approach may reduce the amount of filtering that would otherwise be required to process relevant query responses, selective querying may be useful in a variety of business contexts, including the retail context.

As such, RFID data of item-level tagged goods within a retail environment, such as a grocery store or discount store, may be registered and read. For planning and control of stores or retail business processes, the enhanced approach described herein may be used to accurately identify numerous items at a given point in time. As such, RFID transponders may be integrated or attached to every item for electronic reading. By using mobile readers to selectively read specific RFID tags in predetermined locations (e.g., aisles in the store), tracking the location and quantities of inventory items may be significantly more efficient and reliable than using high-density RFID readers. Such selective RFID reading may also be used to more efficiently solve other business and inventory-related issues, such as out-of-stock problems, shrinkage-based inventory changes, or plan-o-gram compliance.

In some implementations, selective RFID reading may be performed by attaching RFID readers to mobile devices such as shopping carts. In other implementations, robots such as cleaning robots may also serve as carriers for the RFID readers. In yet other implementations, shop personnel, including stock clerks, inspectors, or other employees, may carry a bag or wear a belt holding the mobile reader. Regardless of the carrier system, the mobile reader may interrogate RFIDs of items based on location as the mobile reader travels among the items, such as between the aisles and shelves in a store.

For instance, as a shopping cart with an attached mobile RFID reader is entering a specific aisle (e.g., an aisle devoted to pet products), the mobile reader may scan specifically for items related to pets (e.g., dog treats, cat litter, fish food, etc.) The ability to have the RFID reader scan for particular items in specific locations may be based on the reader's location and direction of travel (e.g., using a geographical positioning system suitable for indoor use) and knowledge of product locations on the shelves (e.g., using information from an ERP system). Using such information, the system may speed up the reading rate of a large amount of tags within a small area of a shelf.

For example, when a mobile RFID reader in a store's pet aisle limits its reading to RFID tags of pet-related products, the RFID reader may be more efficient in obtaining information, such as to verify or adjust inventory quantities of pet products and supplies in a certain location. Moreover, data from a back-end ERP system may be exploited to further improve the reading rates, adjusting reading parameters using updated information, such as to query RFID tags for a smaller quantity of inventory items after many of the items have recently sold. Such improved registering of RFID transponder tags described herein may use the Electronic Product Code™ (EPC) Generation 2 (Gen2) standard or any other suitable RFID standard. Item-level queries, such as a query of an RFID tag, are referred to herein as low-level queries.

In addition to scanning a shelf for items that are expected to be on that shelf, the system may use location information to scan for items that are incorrectly placed (e.g., on the wrong shelf or in the wrong aisle). For example, while in the pet-related aisles of the store, the RFID reader may scan for items that are not pet-related. Such scanning may, for example, identify shampoo, milk or other products that are stored in the wrong location in the store (e.g., by a customer who decided not to buy an item and may have placed it on a wrong shelf). Scanning for such wrongly-placed items may help in identifying and moving those items to their correct shelves or locations where they may be purchased or where they may be protected from spoilage.

The use of mobile readers may extend regular RFID protocols by the incorporating the notion of location. For instance, instead of having fixed RFID readers (e.g. on SmartShelves), mobile readers may continuously monitor retail shelves while the mobile readers are moved along the shelves. The use of mobile readers may combine location information of where a particular reader stands (e.g., which department, aisle, shelf, etc. in the store) and in which direction it scans with regular RFID protocols in order to optimize tuning parameters of the RFID reader. The use of location information may be integrated with standard RFID reading equipment and RFID middleware solutions.

Mobile readers may be connected to a back-end ERP system via a wireless communication technology, such as a wireless local area network (WLAN). For instance, each of the mobile readers may be tracked utilizing wireless communication to provide an accurate position determination. Examples of wireless communication and location technologies include: Active Bat, Cricket, an infrared cell-of-origin system, a radio beacon, or an active or passive RFID device.

A mobile reader may acquire its position and scanning direction by using a location system. Each area in the retail store, for example, may be associated with the expected kind(s) of items and the expected number of items. This location information may be stored on a back-end ERP system. In some implementations, in order to avoid delays through the wireless communication to the ERP, the location information may also be stored on the mobile reader, which may receive real-time and/or periodic updates from the back-end, such as the quantity of sold items obtained from point-of-sale (POS). Such information may be used to derive tuning parameters. For example, within an EPC Gen2 RFID protocol, the select parameters for tag populations and the frame length may be tuned according to the location and items in that location. Both parameters may affect the behavior of the RFID protocol, such as to make scanning more efficient.

Select command parameters may be tuned to interrogate a more targeted set of RFID tags. For example, instead of generically interrogating all possible IDs, a select command may use a mask to limit the ID range(s) to selected tag populations. Specifically, the ID range(s) resulting from the mask may correspond to only those items that are within the reader's scanning range based location and heading of the mobile reader. As a result, only transponders matching the mask will answer the low-level query (e.g., using an EPC Gen2 Query command). This may decrease the collision probability of responses and significantly speed up the interrogation process.

Frame length parameters may also be tuned to provide more efficient reading of RFID tags. For instance, the frame length may determine the number of slots in which RFID transponders distribute their replies during a frame. As such, the frame length may correlate with the number of transponders potentially within the reader's radio frequency (RF) field. The mobile reader's firmware may include an arbitration algorithm to converge to the optimal frame length by adjusting tags' reply probabilities within a range shown in Equation (1).

$$Frame\ length\ range = [0,2^{\,Q\text{-}1}\,] \hspace{3cm} (1)$$

Based on a mobile reader's location, the expected inventory quantities of items within the mobile reader's scan range (e.g., identified from the locally stored inventories list) may be used to set the Q parameter in Equation (1) in as few as one iteration. This may shorten the convergence time for the arbitration. In some implementations, both the select mask parameter and the frame length optimization may be used in combination to achieve a larger speed-up than each single optimization approach.

While the mobile reader's location may be used to derive an ID selection mask for expected groups of items at a particular location, selection masks may also be used in other ways. For example, a selection mask may be inverted to query all but the items expected in that location, such as to query items in a pet-related aisle that are not pet-related. In this way, only the transponders for misplaced items (e.g., shampoo, milk, etc.) will answer. Querying for the misplaced items may be more efficient and reliable than using high-density RFID settings that read all transponders, which may potentially miss some due to unreliable communication. In this way, the use of inverted masks may identify misplaced items more successfully, increasing reading reliability.

Additionally, data from the back-end ERP system may be exploited to further improve the reading rates. For example, the back-end ERP system may store other information (e.g., inventory quantities) on sold products acquired from the point-of-sale (POS) using an RFID-capable checkout system. In collaboration, both the back-end ERP system and the RFID reader may exchange their current inventory information. As a result, both the back-end ERP system and the mobile RFID reader may achieve a more up-to-date and accurate inventory list than each single system alone. This effect of amplification based on each other's information may be referred to as "collaborative resonance."

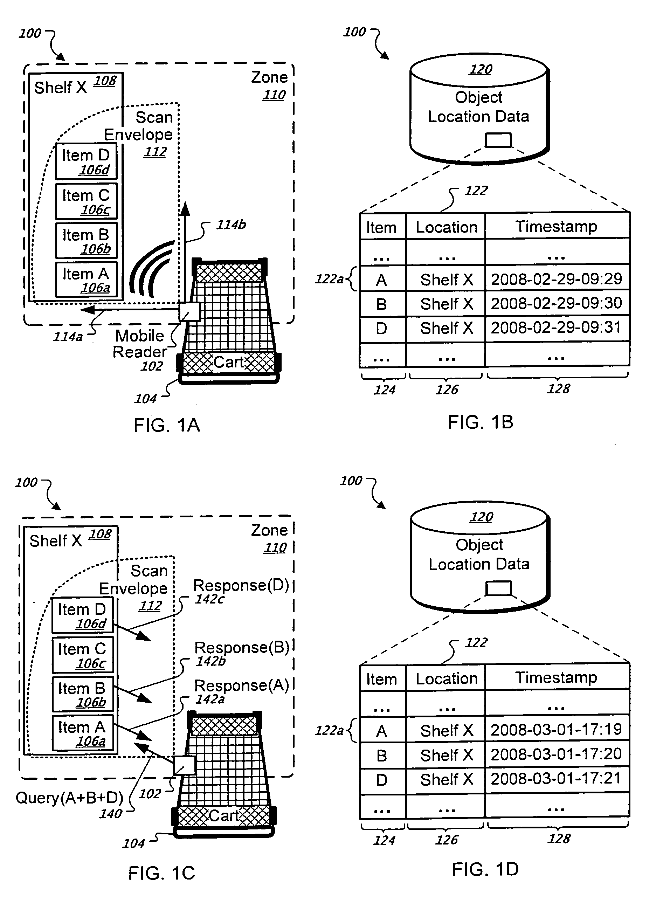

Referring to the figures, FIGS. 1A-D are block diagrams showing an exemplary system 100 for querying and receiving location information for expected items using a mobile reader 102 on a shopping cart 104. The implementation depicted in the system 100 may be used, for example, to provide the mobile RFID reading scenarios described above. In other implementations, the mobile reader 102 may be transported in other ways, such as carried by an employee, carried by a robot, or installed on forklifts or other warehouse equipment.

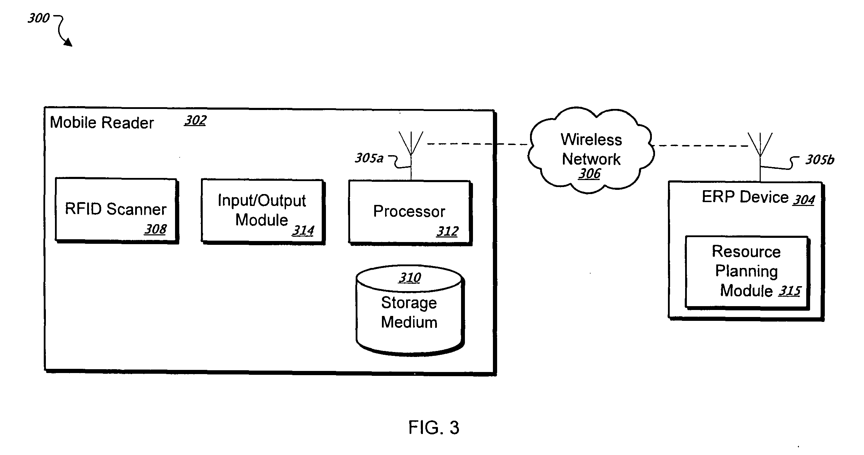

Referring to FIG. 1A, the system 100 may use one or more mobile readers 102 attached to one or more shopping carts 104. The mobile reader 102 may include an RFID scanner (described in more detail below in reference to FIG. 3) or some other scanner operable to send and receive signals to tags or transponders, such as RFID tags. For example, a separate RFID tag may be attached (or incorporated within) each of multiple products or items 106a-d stored on a shelf "X" 108.

The mobile reader 102 may be configured to begin reading RFID tags, for example, when the shopping cart 104 enters a zone 110 or leaves another, undepicted zone. The determination that the shopping cart 104 has entered the zone 110 may be made using location technologies (e.g., Active Bat, Cricket, etc.). The mobile reader 102 may begin scanning items within a scan envelope 112 defined in part, for example, by scan directions 114a and 114b. Specifically, the scan direction 114a may be generally perpendicular to the direction of movement of the cart 104, such as toward the shelf "X" 108, or it may take on another orientation. Generally speaking, a 'scan envelope' refers to the whole two- or three-dimensional space in which a reader can communicate with a tag or other identification device attached to a product.

The scan direction 114b may be generally parallel to the direction of movement of the cart 104, such as down a store aisle that may be represented by, or adjacent to, the zone 110. Because the typical mobile reader 102 may be operable to scan in multiple dimensions, a vertical dimension (not shown) and the range of the mobile reader 102 may define a three-dimensional space, such as that consistent with the vertical or top view represented by the scan envelope 112. Such a space may include items on store shelves, such as the items 106a-d on the shelf "X" 108. In some implementations, the scan envelope 112 may extend to both sides of the cart 104, such as to scan items on both the left side and the right side of a store aisle.

FIG. 1 B is a block diagram of exemplary object location data 120. Generally, the object location data 120 may identify the locations of items, such as products on the shelves within a store. Such information may be generated, at least in part, by the mobile reader 102 scanning items (e.g., items 106a-d) on shelves (e.g., the shelf "X" 108). In some implementations, the object location data 120 may be stored remotely from the mobile reader 102, such as in a back-end ERP system located within the store. As such, the mobile reader 102 may receive initial and updated object location data 120 from the ERP system using wireless communication or wired downloads (e.g., via temporary connections to USB, cable, etc.) In other implementations, the object location data 120 may be stored within the mobile reader 102.

The object location data 120 may include multiple entries 122 (represented here in tabular form) that include location information for items, such as products on store shelves. For instance, an entry 122 may include fields or values such as an item identifier 124 (e.g., A, B or D), a location 126 (e.g., "Shelf X"), and a timestamp 128. Such information may define, for example, the last known location of a particular item at a given time, such as the last time that the RFID tag for a particular item was read by the mobile reader 102. For instance, the entry 122a for item A may indicate that item A 106a is stored on "Shelf X," and the timestamp 128 may indicate that the most recent scan of item A occurred at "09:29" on "2008-02-29" (i.e., 9:29 AM on February 29, 2008). Notably, in an initial state, the object location data 120 does not include an entry for item C 106c.

In some implementations, other fields or data elements may exist for an entry 122, such as the inventory quantity of an item, its price, its good-through or expiration date, etc. In some implementations, multiple entries 122 may exist for the same item 124, such as candy bars that may be located at checkout shelves in addition to the candy aisle. Multiple entries for the same item may be represented, for example, as additional rows in the table of entries 122. Such entries 122 for the same item may differ in the location 126, the timestamp 128, and/or other fields not shown (e.g., inventory quantities, expiration dates, etc.).

FIG. 1C is a block diagram showing an exemplary low-level query 140 transmitted by the mobile reader 102 and multiple responses 142a-c transmitted by some of the items 106a-d in response to the low-level query. For example, the low-level query 140 may be "Query(A+B+D)" which the reader 102 may transmit to read the RFID tags for items A 106a, B 106b and D 106d. The reader 102 may transmit the low-level query 140, for instance, at the time that the cart 104 enters the zone 110. Moreover, the specific items 106 (e.g., items A 106a, B 106b and D 106d) that are queried may be based on entries 122 in the object location data 120. For example, the mobile reader 102 may scan for items A 106a, B 106b and D 106d if those items are pet-related and are identified in the object location data 120 as being stored on the shelf "X" 108 (e.g., a shelf in the "Pet" department of a store). In this case, the item C 106c may not be pet-related, and therefore not included in the low-level query 140 "Query(A+B+D)". As a result of receiving the low-level query 140, each of the responsive items may return their corresponding individual responses 142a-c, which may be received by the mobile reader 102.

FIG. 1D is a block diagram of the exemplary object location data 120 with fields and values updated based on scanning items A 106a, B 106b and D 106d. For instance, as a result of receiving the responses 142a-c, the timestamp 128 for each of the items scanned may be updated with more up-to-date scan times. For example, the timestamp "2008-02-29-09:29" for entry 122b may be updated with the later scan time "2008-03-01-17:19" (e.g., representing a scan of the item A 106a at 5:19 PM on March 1, 2008). Notably, since item C 106c was not expected on the shelf X 108 and was not called in the low-level query 140, the item C 106c did not generate a response, and the object location data 120 was not update to reflect the existence of item C 106c on the shelf X 108.

Other fields in the object location data 120, such as inventory quantities, may also be updated at the same time. If the mobile reader 102 is in wireless or other such communication with the back-end ERP system, the updated object location data 120 may be transmitted to the ERP system in real-time. In some implementations, updated information may be sent to the ERP system in packets, such as at scheduled intervals (e.g., every five minutes). The object location data 120 may be output visually to a user via a display, or may be stored for later use.

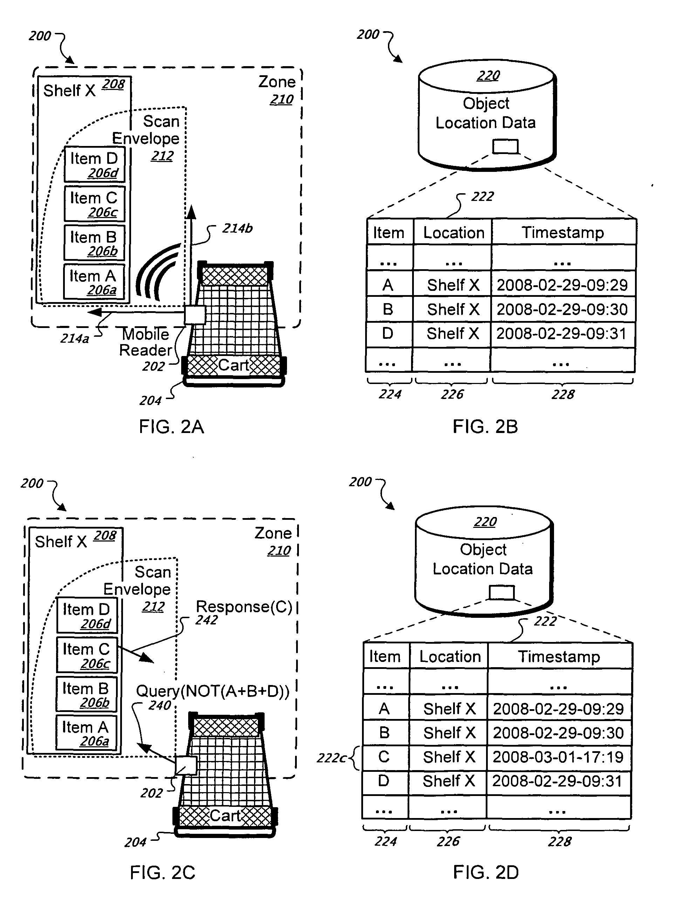

FIGS. 2A-D are block diagrams showing an exemplary system 200 for querying and receiving location information for unexpected (e.g., misplaced) items using a mobile reader 202 on a shopping cart 204. The system 200 may be similar to the system 100 for scanning expected items, and the mobile reader 202 may be similar to the mobile reader 102. In some implementations, the mobile reader 202 may be a dedicated reader used to locate and identify unexpected items, such as items on the wrong shelf in a grocery store, misplaced items in a warehouse, hospital patients or visitors in the wrong ward of a hospital, etc. In some of these examples, the RFID chips may be somewhat mobile (e.g., in addition to mobile readers 202), using inverted ID selection masking to identify out-of-place items (or people).

Referring to FIG. 2A, the system 200 may use one or more mobile readers 202 attached to one or more shopping carts 204. The mobile reader 202 may include an RFID scanner (described in more detail below in reference to FIG. 3) or some other scanner operable to send and receive signals to tags or transponders, such as RFID tags. For example, a separate RFID tag may be attached (or incorporated within) each of multiple products or items 206a-d stored on a shelf "X" 208. Included with the items 206a-d may be the item 206c which may be misplaced on the shelf "X" 208, such as shampoo or milk on a shelf meant to display only pet-related products.

The mobile reader 202 may be configured to begin reading RFID tags of misplaced items, for example, when the shopping cart 204 enters a zone 210. The determination that the shopping cart 204 has entered the zone 210 may be made using location technologies (e.g., Active Bat, Cricket, etc.). At that time, the mobile reader 202 may begin scanning items within a scan envelope 212 defined in part, for example, by scan directions 214a and 214b. The scan envelope 212 may, for example, operate in a similar way as the scan envelope 212. In some implementations, the scan envelope 212 may extend to both sides of the cart 204, such as to scan misplaced or other items on both the left side and the right side of a store aisle.

FIG. 2B is a block diagram of exemplary object location data 220. The object location data 220 may be similar to the object location data 120, identifying the locations of items, such as products on the shelves within a store. Such information may be generated, at least in part, by the mobile reader 202 scanning items (e.g., items 206a-d) on shelves (e.g., the shelf "X" 208). The object location data 220 may also be similar to the object location data 120 in how the information may be stored, shared, used, etc. with a back-end ERP system with which the mobile reader 202 may communicate.

The object location data 220 may include multiple entries 222 (e.g., similar to entries 122 and used in a similar way) that include location information for the items 206a-d. The information may include, for example, an item identifier 224 (e.g., A, B, D, etc.), a location 226 (e.g., "Shelf X"), and a timestamp 228. Other fields or values in the entries 222 may identify whether a product or item is out-of-place.

FIG. 2C is a block diagram showing an exemplary low-level query 240 transmitted by the mobile reader 202 and a response 242 transmitted by the item C 206c in response to the low-level query 240. For example, the low-level query 240 may be "Query(NOT(A+B+D))" which the reader 202 may transmit to read the RFID tags for any items that are not items A 206a, B 206b or D 206d. The reader 202 may transmit the low-level query 240, for instance, at the time that the cart 204 enters the zone 210. Moreover, the specific items 206 (e.g., items A 206a, B 206b and D 206d) that are identified in the low-level query may be based on entries 222 in the object location data 220 that identify the particular items 224 expected to exist on the shelf "X" 208. The mobile reader 202 may be scanning for items other than items A 206a, B 206b and D 206d, for example, in order to locate any items that are on the wrong shelf. For example, items A 206a (e.g., dog treats), B 206b (cat litter) and C 206c (e.g., fish food) may be items that are expected to be on the shelf "X" 208. As such, the low-level query 240 "Query(NOT(A+B+D))" may be formulated automatically by the mobile reader 202 to scan only for items that are not pet-related. As a result of receiving the low-level query 240, any responsive item (e.g., the item C 206c) may return its response (e.g., the response 242) to the mobile reader 202.

FIG. 2D is a block diagram of the exemplary object location data 220 with fields and values updated based on scanning the item C 206c and determining that the item C 206c is "unexpected" (e.g., located on the wrong shelf). For instance, as a result of receiving the response 242, the entry 222c for the item C may be updated with the current location 226 (e.g., "Shelf X") and a more up-to-date scan timestamp 228 (e.g., "2008-03-01-17:19"). In some cases, the update to the object location data 220 may be in the form of a row that is inserted into the table of entries 222 if, for example, one or more row entries 222 exist for inventory quantities of the item C 206c that are stored in the correct location(s). In some implementations, the inventory quantities of such correctly-located items may be adjusted or annotated in some way to reflect the inventory quantities that have just been discovered to be stored in the wrong place.

Other fields in the entry 222c, such as an indicator that an item is out-of-place, may also be updated at the same time. If the mobile reader 202 is in wireless communication or other such communication with the back-end ERP system, the updated object location data 220 may be transmitted to the ERP system in real-time. In some implementations, updated information may be sent to the ERP system in packets, such as at scheduled intervals (e.g., every five minutes). The object location data 220 may be output visually to a user via a display, or may be stored for later use.

FIG. 3 is a block diagram showing exemplary components of a system 300 for improved registering of RFID transponder tags. As depicted, the system 300 includes a mobile reader 302 that may communicate with a back-end Enterprise Resource Planning (ERP) device 304. The communication may occur, for example, across any suitable wireless network 306 (e.g., using Active Bat, Cricket, etc.) using multiple antennas 305a (one included within each of one or more mobile readers 302) and an antenna 305b included within the ERP device 304.

The mobile reader 302 may be similar to the mobile readers 102 and 202 described above. As such, the mobile reader 302 may be portable and operable to read RFID tags of geographically dispersed items, such as products on the shelves in a store. For example, multiple mobile readers 302 may be mounted on one or more shopping carts in order to scan the RFID tags of items located on shelves throughout the store. The scanning may occur, for example, as customers push the carts through the store aisles while shopping. As described above, the mobile reader 302 may use location information available from the ERP device 304 in order to limit scanning of RFID tags to those within the immediate area of the mobile reader 302. For example, the mobile reader 302 may scan for pet-related items only while the shopping cart (to which the mobile reader 302 is attached) is in the pet section of the store. Similarly, to search for wrong-shelved items, the mobile reader 302 may alternatively scan for non-pet-related items (e.g., shampoo, milk, etc.) while in the pet-related aisles, or other misplaced items in other aisles (e.g., dog treats in the shampoo aisle), and so on.

Additional or the same mobile readers 302 may be used to scan items stored in a store's stock room, or to scan items immediately as they are unloaded from delivery trucks, to name a few examples. In the case that a particular truck is delivering items related to pet products, the mobile reader 302 may scan specifically for only those pet-related items that are likely to be unloaded from the truck.

The ERP device 304 may be part of an overall ERP system, some or all of which may be located in a store or warehouse in communication (e.g., wireless or wireline communication) with one or more mobile readers 302. The communication may use any suitable location technology, such as Active Bat, Cricket, an infrared cell-of-origin system, a radio beacon, or an active or passive RFID device. The ERP device includes a resource planning module 315 that is capable of performing high-level queries, such as a high-level query that outputs an indication of items expected at a given location. The high-level query may be formulated at the mobile reader 302 or the ERP device 304 in response to a request generated at the mobile reader 302 or the ERP device 304. The response the high-level query may be provided to the mobile reader 302 or the ERP device 304 for further processing.

The mobile reader 302 may include an RFID scanner 308, a storage medium 310, a processor 312, and an input/output module 314. The RFID scanner 308 may be any scanner that is operable to send and receive signals to tags or transponders, such as RFID tags. The RFID scanner 308 may further be range-adjustable to increase or decrease its scanning envelope, capable of scanning in programmable directions (e.g., to the left or right or both), and capable of having its parameters tuned. For example, parameters that may be tuned include select parameters for tag populations (e.g., using masks to select specific RFID tag IDs as described above), frame length (e.g., the time duration in which to scan), or any other parameters that may be tuned within various protocols, such as within an EPC Gen 2 RFID protocol.

The storage medium 310 may contain similar information that is included in the object location data 120 and 220. For example, the storage medium 310 may include location information for each item that may be scanned by the mobile reader 302. The information for any particular item may include, for example, the item ID, its location (e.g., shelf, bin, rack, aisle, cabinet or other location identifier), a timestamp indicating the last time the item was scanned, an inventory quantity, and any other fields that may be useful in tracking items and their locations. Information stored in the storage medium 310 may be updated in several ways, including as a result of the RFID scanner 308 scanning items or as updated information is received from the ERP device 304. Further, updated information in the storage medium 310 may be transmitted to the ERP device 304 in real-time (e.g., as it is updated by the RFID scanner 308) or at scheduled intervals (e.g., every five minutes, twice a day, once a week, etc.). The mobile reader 302 may use information stored in the storage medium 310, for example, to scan specific items on the shelves based on the location of the mobile reader 302 and the expected locations of items (e.g., on shelves within the store).

The processor 312 may determine, using the mobile reader's current location and location information in the storage medium 310, which items to scan on the shelves. If the mobile reader 302 is currently checking inventory, for example, the processor 312 may generate a selection mask for the specific items in proximity to the mobile reader 302. Such a selection mask may be used, for example, to produce a low-level query such as the low-level query 140 "Query (A+B+D)" described in reference to FIG. 1C. If the mobile reader 302 is currently checking for misplaced items (e.g., items on the wrong shelf), the processor 312 may generate an inverted selection mask based on the IDs of the specific items expected to be in proximity to the mobile reader 302. Such a selection mask may be used, for example, to produce a low-level query such as the query 140 "Query(A+B+D) described in reference to FIG. 1C.

The input/output module 314 may provide the input and output of location data used by the mobile reader 302. For example, the input/output module 314 serve as an interface for sharing location information between the storage medium 310 and the ERP device 304.

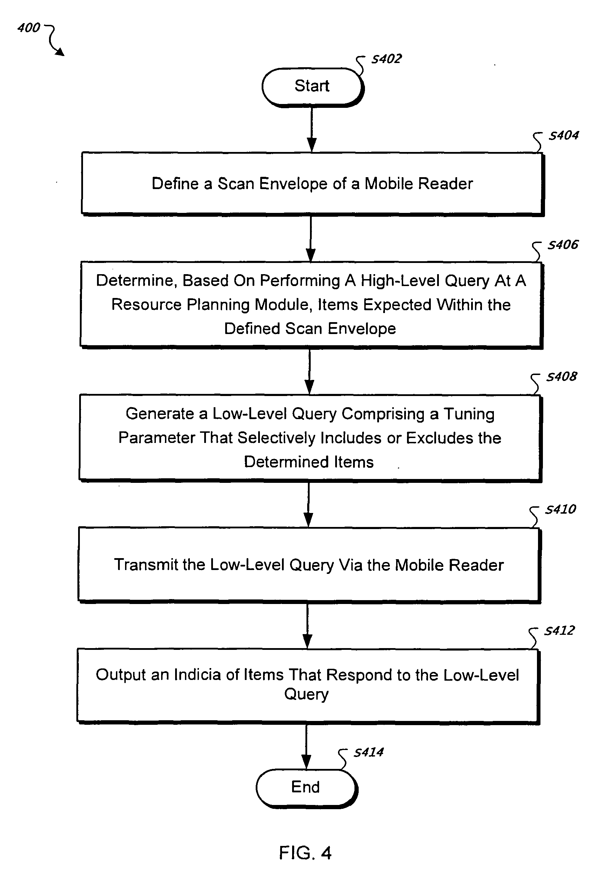

FIG. 4 is a flow chart of an exemplary process 400 for reading RFID transponder tags using a mobile reader. For example, referring to FIGS. 1A-D, the process 400 may be used by one or more mobile readers 102 within the system 100 to scan items that are expected to be on specific store shelves. Specifically, referring to FIG. 1C, the items expected to be stored on the shelf "X" 108 may include items A 106a, B 106b and D 106d. Referring to FIGS. 2A-D, the process 400 may also be used by one or more mobile readers 202 within the system 200 to scan items that are in an unexpected location (e.g., items misplaced on the wrong shelf). Specifically, referring to FIG. 2C, the items not expected to be stored on the shelf "X" 208 may include item C 206c. The process 400 may also be used in association with the mobile reader 302 within the system 300, as described in reference to FIG. 3.

Briefly, the computer-implemented process 400 includes, *inter alia*, defining a scan envelope of a mobile reader, determining, based on performing a high-level query at a resource planning module, the items expected within the scan envelope, generating a low-level query that includes or excludes the expected items, transmitting the low-level query, and outputting indicia responsive to the low-level query.

In more detail, when process 400 begins (S402), a scanning system is capable of performing a scan. For example, referring to FIGS. 1A-D, the scanning system may be the system 100 that includes one or more mobile readers 102 operable to read RFID tags of items that are expected to be on particular shelves, such as the items 106a, 106b and 106d on the shelf "X" 108. In another example, referring to FIGS. 2A-D, the scanning system may be the system 200 that includes one or more mobile readers 202 operable to read RFID tags of items (e.g., the item C 106c) that are not expected to be on particular shelves.

Returning to FIG. 4, a scan envelope of a mobile reader is defined (S404). For example, referring to FIG. 1A, the system 100 may define a scan envelope 112. The scan envelope 112 may correspond to the three-dimensional space in which the mobile reader 102 is capable of reading RFID tags, such as RFID tags on the items 106a-d stored on the shelf "X" 108. The scan envelope 112 may further be based on the location and travel direction of the cart 104, as well as the range of the RFID scanner included in the mobile reader 102.

Based on performing a high-level query at a resource planning module, expected items within the defined scan envelope are determined (S406). A "high-level" query refers to a query formatted or written using a high-level query language (HLQL), such as the Structured Query Language (SQL), and is contrasted with a "low-level" query, for instance a low-level RFID communication command. In this regard, the enhanced item tracking approach described herein may involve both a high-level and a low-level query.

The purpose of the high-level query is to identify or determine a quantity or other indicia of items expected at a particular location, while the low-level query uses the results from the high-level query to further query the expected or unexpected items, such as via an over-the-air protocol.

For example, referring to FIG. 1A, the system 100 may use the ID of shelf "X" 108 to look up items in the object location data 120 that are expected to reside within the scan envelope 112, using a high-level query. Specifically, the expected items may correspond to any entries 122 having "Shelf X" as the value for the location 126. For example, such identified entries 122 may include items A, B and D (e.g., as listed in the item 124), the IDs of which correspond to items A 104a, B 104b and D 104d on the shelf "X" 108. In some cases, the scan envelope 112 may encompass multiple shelves, bins, racks or other storage locations. In that case, the expected items determined for the scan envelope 112 would include all items defined in the object location data 120 for those storage locations (e.g., shelves, bins, racks, etc.), such as those items located on particular side of the mobile reader.

The object location data 120 is accessed using, or stored at a resource planning module. Specifically, the ERP system or device includes, as a component, the resource planning module (or "RFID Query Planning" module) which includes a 'system model,' or a list of the products or items and their corresponding locations. The resource planning model performs high level query planning, such as to inform the mobile reader which products to expect in relation to the location or scanning envelope of the mobile reader.

The process of informing the mobile reader of the expected items at a particular location may be performed using one or more of several techniques. In a polling example, the mobile reader determines and communicates its location to the ERP device, which determines which products are expected at the given location (collectively, "the select parameters"). In a further polling example, the mobile reader requests an indication the expected items for multiple locations (such as all locations) from the ERP device, so that reading can be performed by comparing the scanning envelope to the stored multiple locations, without maintaining a connection between the ERP device and the mobile reader. In this case, the mobile reader iteratively or repeatedly requests updates of the indication, so that the reader has a current list of expected items.

In a pushing example, the ERP device requests that the mobile reader provide an indication of the reader's location (or scanning envelope), performs a query based on this information, and sends the select parameters back to the mobile reader. In an alternative pushing example, the ERP device sends a list with the select parameters for more than one or all locations to the mobile reader, and iteratively or repeatedly sends updates or changes to the mobile reader as they are generated. In all of the above cases, communication between the ERP device and the mobile reader may occur using various interfaces, such as web services, remote procedure calls (RPCs), Business Application Programming Interface (BAPI) calls, HTTP, or other techniques.

The resource planning model incorporates information from ERP devices to increase the reading rate and/or reading probability on a radio protocol level. Examples of queries from this component include: selective querying of specific IDs that are inventoried according to the current system model at a given location, thereby reducing collisions; selective querying of a group of tags that are expected in a location according to the system model; also reducing collusions; selective querying of a groups of tags that are not allowed in a location based on inventory constraints for the location, further reducing collisions; and selection of tags based on facts (e.g. "best before" date < next manual inspection at the shelf location) to predict future violation of inventory constraints based on inventory information.

Based on the results of the high-level query, a low-level query is generated that includes a tuning parameter that selectively includes or excludes the determined items (S408). For example, tuning parameters may include select parameters for tag populations (e.g., using masks to select specific RFID tag IDs as described above), frame length (e.g., the time duration in which to scan), or any other parameters. In particular, masks may be used to generate a low-level query that includes those items expected to be on a specific shelf, or a low-level query that excludes those items (e.g., to find misplaced items). Referring to FIG. 1C, an exemplary inclusive low-level query may be the low-level query 140, or "Query(A+B+D)," which the mobile reader 102 may transmit to read the RFID tags for items A 106a, B 106b and D 106d. Referring to FIG. 2C, an exemplary exclusive low-level query may be the low-level query 240, or "Query(NOT (A+B+D))," which the mobile reader 202 may transmit to read the RFID tags for any items that are not items A 206a, B 206b or D 206d.

The low-level query is transmitted via the mobile reader (S410). For example, referring to FIG. 1C, the mobile reader 102 may transmit the low-level query 140, generally within the scan envelope 112 and in the relative direction of the items 106a-d. In another example, referring to FIG. 2C, the mobile reader 202 may transmit the low-level query 240, generally within the scan envelope 212 and in the relative direction of the items 206a-d. Specifically, the queries 140 and 240 may be transmitted by the RFID scanner 308 (FIG. 3).

The mobile reader uses the results of the high-level query, performed at the resource planning module to generate low-level queries to communicate to tags (i.e. RFID tags) in an enhanced manner. In a further implementation, the resource planning module itself generates the low-level queries for execution by the mobile reader.

An indicia of items that respond to the low-level query is output (S412). For example, referring to FIG. 1C, based on the receipt of the response(A) 142a, the response(B) 142b, and the response(D) 142c, the mobile reader 102 may update corresponding entries 122 in the object location data 120. In particular, the timestamps 128 for responding items A, B and D may be updated to indicate the date and time that the items' RFID tags were scanned by the mobile reader 102. In some implementations, other fields in the object location data 120 may be updated, such as inventory quantities. For example, if the item A 106a corresponds to XYZDogFood Company dog treats and multiple (e.g., fifty) responses(A) 142a are received, then the inventory quantity field in the object location data 120 may be updated to reflect the scanned inventory quantity (e.g., fifty) of boxes of XYZDogFoodCo dog treats.

In another example, referring to FIG. 2C, based on the receipt of the response(C) 242, the mobile reader 202 may update corresponding entries 222 in the object location data 220. In particular, the location 226 for responding item C may be updated to indicate the location of C's RFID tag that was scanned by the mobile reader 202. Additionally, the timestamp 228 for responding item C may be updated to indicate the date and time that the item C's RFID tag was scanned by the mobile reader 202. In some implementations, other fields in the object location data 220 may be updated, such as inventory quantities. Output may include audio or video output or any other output that stimulates a user's senses, or output may occur by storing the indicia on a storage medium for later use.

In some implementations, updates to the object location data 120 or the object location data 220 may be communicated in real-time to an ERP system, such as the ERP device 304 shown in FIG. 3. In other implementations, the updates may be held until later, such as to transmit the updates on a scheduled basis (e.g., every five minutes, each hour, twice daily, etc.) or when a pre-determined number of updates have accumulated. The process 400 ends (S414) when the indicia of items that respond to the low-level query have been output.

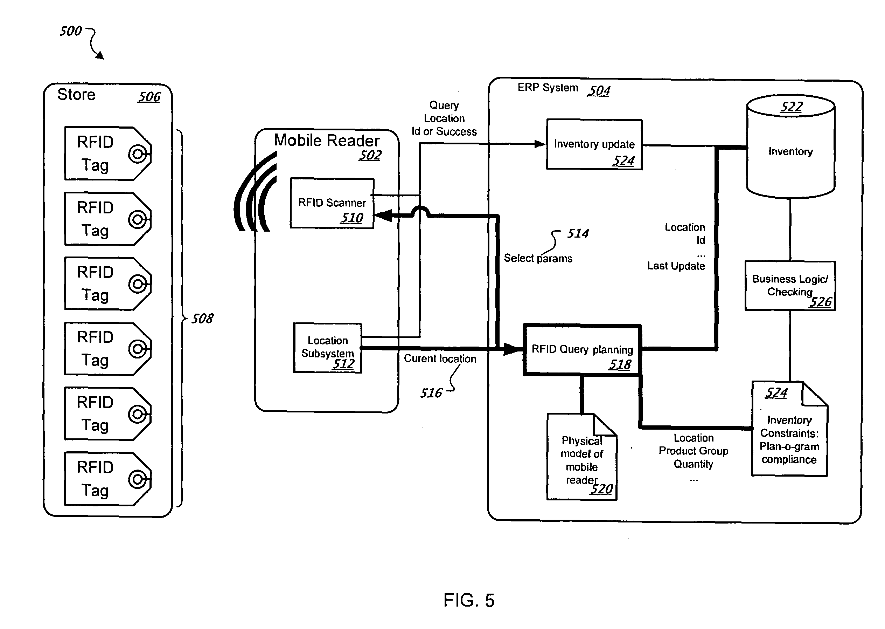

FIG. 5 is a block diagram showing an exemplary system 500 for optimizing queries for specific items using inventory data. In general, FIG. 5 depicts the entities of the system 500 in a systematic way, using bolding to indicate some of the key entities that may contribute to more efficient registering and reading RFID data. In general, the system may include low-level query optimization for RFID using an over-the-air provisioning (OTAP) protocol (e.g., EPC Gen2 OTAP) by an ERP system on the basis of providing location information to the mobile reader, the current system model (e.g., inventory information based on past reads/business logic), and predictions and constraints that are based on the application (e.g., plan-o-gram compliance, physical model for mobile reader, etc.). Specifically, the system 500 may use a novel method for query planning for RFID readers that incorporates information from ERP systems to increase the reading rate and/or reading probability on a radio protocol level.

Briefly, the system 500 includes a mobile reader 502, an ERP system 504, and a store 506. The mobile reader 502 may be operable to scan multiple RFID tags 508 that are attached to (or embedded within) items in the store 506. For example, the mobile reader 502 may be similar in operation to the mobile readers 102, 202 and 302 described above. In some implementations, the RFID tags 508 may instead be RFID tags in other places, such as in a warehouse, etc.

The mobile reader 502 includes an RFID reader 510 and a location subsystem 512. The RFID reader (or "scanner") 510 may be similar to the RFID scanner 308 described in reference to FIG. 3. The RFID scanner 510 may receive select parameters 514 from the ERP system 504, such as select parameters that allow the mobile reader 502 to query only a specific population of RFID tags 508 in the store 506. Further, other select parameters 514 may identify frame lengths to be used when querying RFID tags 508, where, for example, the frame lengths may depend on the inventory quantities of the items associated with the RFID tags 508. In some implementations, the frame length may also depend on other features, such as the physical size of the items, expected arrangement on the shelves, etc. The location subsystem 512 may be similar to the object location data 120 described in reference to FIG. 1 B or the object location data 220 described in reference to FIG. 2B.

The ERP system 504 includes an RFID query planning module 518, a physical model 520, an item inventory 522, multiple inventory constraints 524, an inventory update module 526, and a business logic checking module 528. The ERP system 504 may be similar in function to the ERP device 304 described in reference to FIG. 3. In some implementations, other components of the ERP system 504 may exist.

The RFID planning module 518 may generate the select parameters 514 that may be provided to the RFID reader 510. Such parameters may use RFID reader model information from the physical model 520, location IDs from the item inventory 522, and inventory information from the item inventory 522. The physical model 520 may include information describing a physical model (e.g., scan ranges, etc.) of the RFID reader 510. If different RFID readers 510 are in use, then the physical model 520 may define physical models of each of the different RFID reader types.

The item inventory 522 may include a complete inventory of items within the store 506 as well as their corresponding RFID tags 508. The inventory constraints 524 may include, for example, plan-o-gram compliance information, such as information that describes how multiple stores (e.g., in the same chain) may be organized so that customers may experience the same look and feel. The system 500 may use the inventory constraints 524, for example, to identify items that are misplaced or not plan-o-gram compliant in some way.

The inventory update module 526 may receive query location or success information from the RFID reader 510. The information may be based on responses received by the RFID reader 510 after querying the RFID tags 508. For example, the information may include verification of (or updates to) the locations of items within the store 506. Such information may be used to update the item inventory 522. The business logic checking module 528 may be used, for example, to combine business logic (e.g., using plan-o-gram compliance information from the inventory constraints 524) with inventory item information in order to generate selection parameters 514.

Where other systems may generally need to read all tags in the range of an RFID reader in order to solve inventory problems, the system 500 may provide optimizations by: a) selective querying of specific IDs that are inventoried according to the current system model at a given location; b) selective querying of a group of tags that one expects in a location according to the system model; c) selective querying of a groups of tags that are not allowed in a location based on inventory constraints for the location; and d) selection of tags based on facts (e.g., the "best before" date of the items versus the next scheduled manual inspection at the shelf location) to predict future violation of inventory constraints based on inventory information. Any and all such optimizations may lead to major RFID reading efficiencies (e.g., speed-up, accuracy, etc.) from using those techniques.

In cases a) and b), the ERP system may determine which product groups or even which items should be located in the store. This location information may be used to optimize the reading of RFID tags of items expected in specific locations, as described above in reference to FIGS. 1A-D. In cases c) and d), the reader may detect misplaced products, as described with reference to FIGS. 2A-D.

In cases c) and d) of the queries described above, it may be only necessary to prove or disprove the existence of a product at a defined location. As such, a protocol optimization in accordance to the tag state machine specification may skip the tag acknowledgement and reading phase of the protocol, effectively aborting the protocol. By skipping those phases, the mobile reader may still signal the success of query as proof of existence (e.g., misplaced items) at a faster rate.

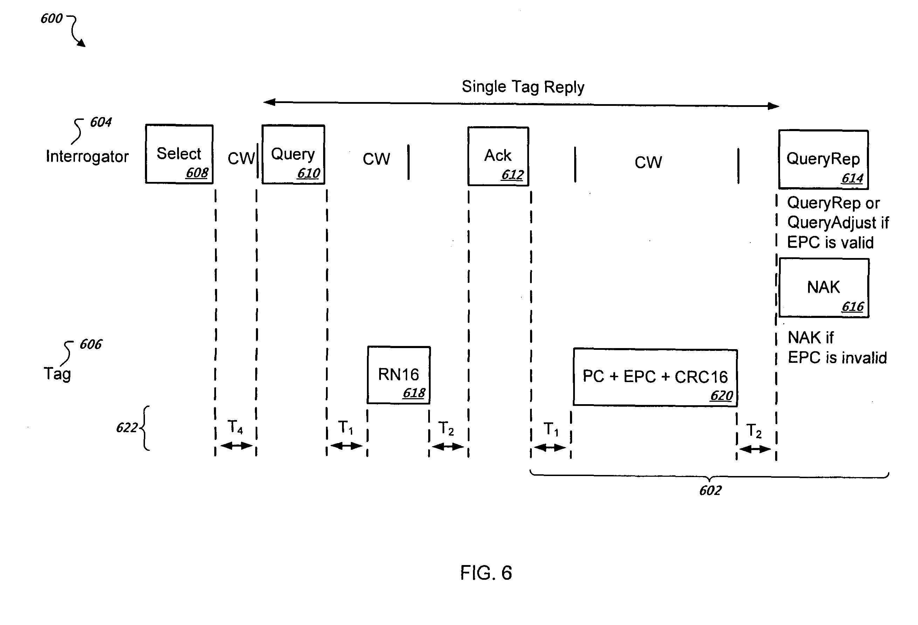

FIG. 6 is a block diagram showing an exemplary automation protocol 600 that may be aborted to bypass unnecessary reading of specific RFID IDs of tagged items. Generally, the entire protocol 600 may be used within the systems 100 or 200, for example, to read RFID tags of items expected (and unexpected) to be in particular locations. The protocol 600 may be aborted (e.g., bypassing sequence 602) when, for example, only the inventory quantity of items is required but the specific IDs of the tagged items are unnecessary. In that case, a particular RFID transponder may reply with a random number when initializing the arbitration, but not send back its EPC identification. As a result, the EPC Gen2 radio protocol may be more efficient (e.g., speeding up more than 50%) because reading times for the 96-bit IDs may be saved.

Briefly, the protocol 600 includes a process for an interrogator 604 and a process for an RFID tag 606. The interrogator 604 processes may include process select 608, query 610, acknowledgement 612, query reply 614, and NAK 616. The RFID tag 606 processes may include process RN16 618 and "PC+EPC+CRC16" 620. When the protocol 600 is aborted, for example, the bypassed processes 602 may include processes 620, 614 and 616. As a result of aborting the protocol 600, a portion of the protocol execution times, such as times 622, may be saved.

If the reading of IDs is skipped, groups of items and misplaced items may not be separated anymore. However, the reader's location may be used to identify to the group of items. As a result, the found number (e.g., inventory quantity) of items may be correctly associated to the items within the item location data. Despite the limitation regarding misplaced items, there are enough situations where the protocol abort approach may be applicable.

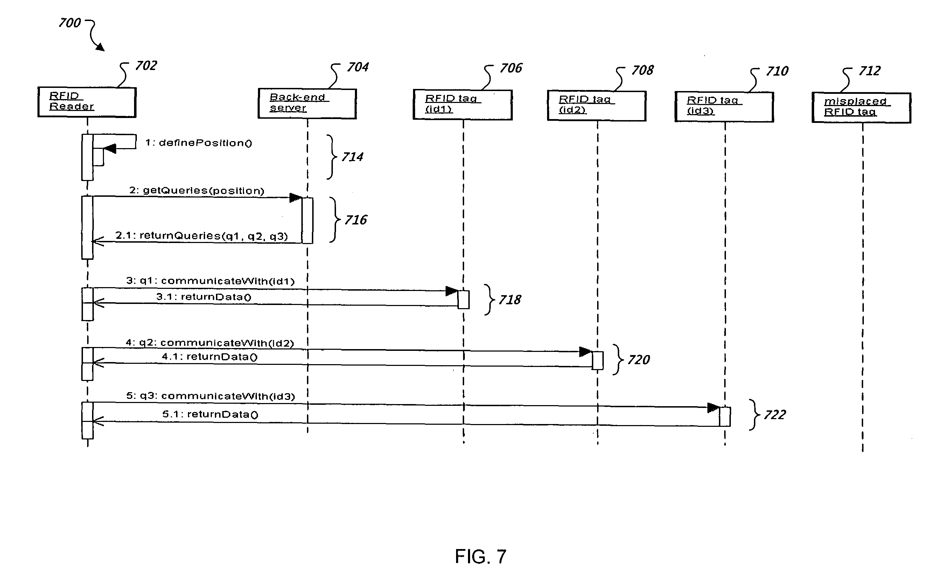

FIG. 7 is a swim-lane diagram of exemplary queries 700 on specific items, illustrating how both the high-level and low-level queries interact. The queries 700 may occur, for example, between an RFID reader 702, a back-end ERP server 704, and multiple RFID tags 706-712. The RFID reader 702 may be similar, for example, to the mobile RFID readers 102 and 202 described above.

In a sequence 714, the RFID reader 702 may define its position (e.g., a specific aisle in a store, warehouse, etc.) by using any suitable wireless communication or location technologies such as Active Bat, Cricket, an infrared cell-of-origin system, a radio beacon, or an active or passive Radio Frequency IDentification (RFID) device.

Once its location is established, a sequence 716 may include queries and responses for the RFID reader 702 to determine IDs of items to query in that location. For example, the items may be on shelves in close proximity to the RFID reader 702, as determined using item location information. The back-end ERP server 704 may provide the item location information if the information is not already stored locally on the mobile RFID reader 702. As a result, the IDs of items to query in that location may correspond, for instance, to items A 106a, B 106b and D 106d described in reference to FIG. 1C.

Sequences 714 and 716 generally define the formulation, processing, and response for the high-level query. Specifically, the mobile reader provides its determined location, and polls the resource planning module on the back-end server for the select parameters, which provides such data to the mobile reader based on information stored in its system module.

In sequences 718, 720 and 722, the RFID reader 702 may query the RFID tags 706-710 of the items in that location and receive corresponding responses. In some implementations, the query portions of the sequences 718, 720 and 722 may be combined into a single low-level query, such as the combined query 140 (e.g., "Query(A+B+D)") described in reference to FIG. 1A. As a result, individual responses (e.g., responses 142a-c) may complete the sequences 718, 720 and 722. An additional sequence (not shown) may be used to query items such as the misplaced item corresponding to the misplaced RFID tag 712, as described in reference to FIG. 2C.

Sequences 718, 720, and 722 generally define the formulation, processing, and response for the low-level query. Specifically, the mobile reader generates the low-level queries to communicate with tags or other identifiers. Using an example EPC standard, an example query formulated as shown below in Table 1:

Table 1: Example Low-Level Query

|  | Command [4] |  |  |  |  |  |  |  |  |
|---|---|---|---|---|---|---|---|---|---|
|  | Select | Target[3]=SL | Action[3]= Assert SL | MemBank[2] =EPC | Pointer[EBV] =Company Prefix | Length[B] =Company Prefix- Item Reference | Mask[Variable] =Masked Company and Product (example) | Truncate[t] =Disable truncation | CRC16[16] |
| opcode | 1010 | 100 | 000 | 01 | 00001110 | 00101100 | 000100000000000000 0000011001010000000 | 0 |  |
|  | Query | DR[1] | M[2] | TRExt[] | Sel[2] | Session[2] | Target[2] | Q[4] | CRC5[5] |
|  | 1000 | 0 | 00 | 0 | 11 | 00 | 0 | 0101 |  |
|  |  |  |  |  |  |  |  |  |  |

For a 99% reading accuracy, the Table 1 query would take one second for a given quantity of products at a set range. Without using the enhanced approach described herein, the query would be formulated as shown below in Table 2:

Table 2: Example Low-Level Query

| | Command [4] | | | | | | | | |
|---|---|---|---|---|---|---|---|---|---|
| | Select | Target[3]= | Action[3]= | MemBank[2]= | Pointer[EBv]= | Length[8]= | Mask[Variable]= | Truncate[1]= | CRC16[16] |
| opcode | 1010 | 000 | 010 | 01 | 00000000 | 00000000 | 0 | 0 | |
| | Query | DR[1] | M[2] | TRExt[] | Sel[2] | Session[2] | Target[2] | Q[4] | CRC5[5] |
| | 1000 | 0 | 00 | 0 | 00 | 00 | 0 | 0111 | |
| | | | | | | | | | |

For a 99% reading accuracy, the Table 2 query would take 8 seconds for the given quantity of products at the same set range. As such, and to its advantage, the enhanced approach described herein reduces the probability of collisions and associated bandwidth usages, allowing for more frequent item tracking events, increasing inventory accuracy and reducing unnecessary restocking.

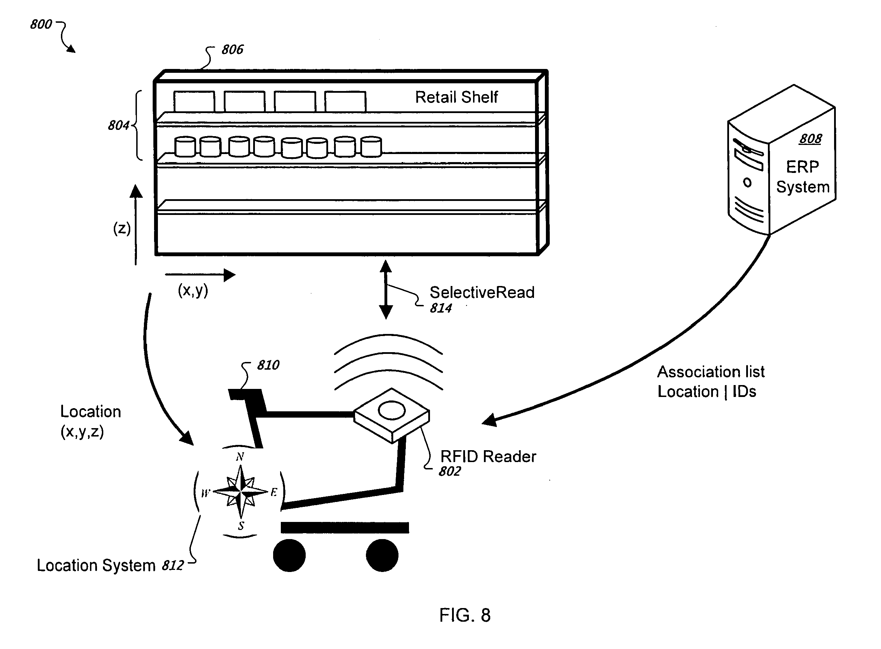

FIG. 8 is a block diagram of an exemplary architecture for a system 800 using a mobile RFID reader to selectively read items based on location information obtained from an ERP system. For example, the system 800 may be similar to other systems (e.g., the systems 100, 200, etc.) described above. The system 800 includes an RFID reader 802, items 804 on a retail shelf 806, and an ERP system 806. The RFID reader 802 may be mounted, for example, on a shopping cart 810 or other such mobile device. The RFID reader 802 may use a location system 812 to determine its location, using any suitable wireless communication or location technologies (e.g., Active Bat, Cricket, etc.). Once its location is established, the RFID reader 802 may use item location information (e.g., stored locally or available from the ERP system 806) to selectively read 814 the RFID tags of the items 804.

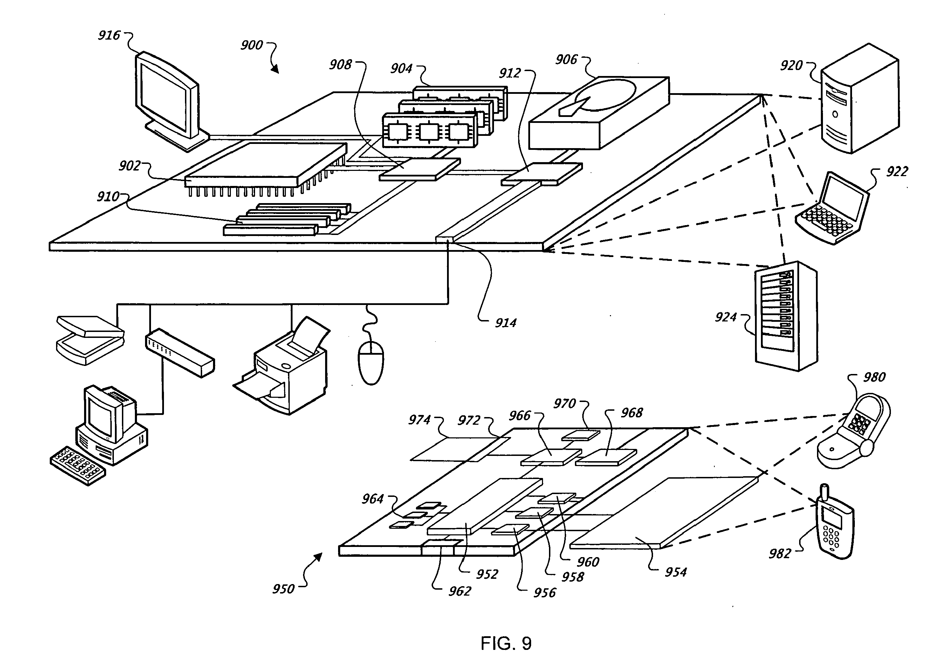

FIG. 9 is a block diagram of computing devices 900, 950 that may be used to implement the systems and methods described in this document, as either a client or as a server or plurality of servers. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smartphones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 may process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multiprocessor system).

The memory 904 stores information within the computing device 900. In one implementation, the memory 904 is a computer-readable medium. In one implementation, the memory 904 is a volatile memory unit or units. In another implementation, the memory 904 is a non-volatile memory unit or units. The storage device 906 is capable of providing mass storage for the computing device 900. In one implementation, the storage device 906 is a computer-readable medium. In various different implementations, the storage device 906 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 904, the storage device 906, memory on processor 902, or a propagated signal.

The high speed controller 908 manages bandwidth-intensive operations for the computing device 900, while the low speed controller 912 manages lower bandwidth-intensive operations. Such allocation of duties is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 may process instructions for execution within the computing device 950, including instructions stored in the memory 964. The processor may also include separate analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD display or an OLED display, or other appropriate display technology. The display interface 956 may include appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication (e.g., via a docking procedure) or for wireless communication (e.g., via Bluetooth or other such technologies).

The memory 964 stores information within the computing device 950. In one implementation, the memory 964 is a computer-readable medium. In one implementation, the memory 964 is a volatile memory unit or units. In another implementation, the memory 964 is a non-volatile memory unit or units. Expansion memory 974 may also be provided and connected to device 950 through expansion interface 972, which may include, for example, a SIMM card interface. Such expansion memory 974 may provide extra storage space for device 950, or may also store applications or other information for device 950. Specifically, expansion memory 974 may include instructions to carry out or supplement the processes described above, and may include secure information also. Thus, for example, expansion memory 974 may be provide as a security module for device 950, and may be programmed with instructions that permit secure use of device 950. In addition, secure applications may be provided via the SIMM cards, along with additional information, such as placing identifying information on the SIMM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 974, memory on processor 952, or a propagated signal.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS receiver module 970 may provide additional wireless data to device 950, which may be used as appropriate by applications running on device 950.

Device 950 may also communication audibly using audio codec 960, which may receive spoken information from a user and convert it to usable digital information. Audio codex 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smartphone 982, personal digital assistant, or other similar mobile device.

Various implementations of the systems and techniques described here may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

A number of implementations have been described. Nevertheless, it will be understood that various modifications may be made without departing from the spirit and scope of the disclosure. Accordingly, other implementations are within the scope of the following claims.

**Claims**

1. A computer-implemented method comprising:

   defining (s404) a scan envelope of a mobile reader;
   determining (s406), based on performing a high-level query at a resource planning module, items expected within the defined scan envelope;
   generating (s408) a low-level query comprising a tuning parameter that selectively includes or excludes the determined items;
   transmitting (s410) the low-level query via the mobile reader; and
   outputting (s412) an indicia of items that respond to the low-level query.

2. The method of claim 1, wherein the scan envelope is defined based on determining a absolute or relative location and scanning direction of the mobile reader.

3. The method of claim 1 or 2, wherein the location of the mobile reader is determined using Active Bat, Cricket, an infrared cell-of-origin system, a radio beacon, or an active or passive Radio Frequency IDentification (RFID) device.

4. The method of any one of claims 1 to 3, wherein the indicia further comprises a quantity of the items that respond to the query; and/or a unique identifier of each of the items that responds to the low-level query.

5. The method of any one of the preceding claims, further comprising

   determining, based on a tuning parameter that selectively excludes the determined items and further based on the output indicia, whether a plan-o-gram is satisfied; and/or
   generating, based on a tuning parameter that selectively includes the determined items and further based on the output indicia, an inventory of the items that respond to the low-level query.

6. The method of any one of the preceding claims, wherein
   outputting the indicia further comprises updating, using the indicia, a database disposed on the mobile reader;
   the mobile reader is preferably a mobile Radio Frequency IDentification (RFID) device, and
   the low-level query is preferably formatted according to the EPC Gen 2 standard.

7. The method of any one of the preceding claims, wherein the low-level query further comprises a frame length parameter, generated based on a quantity of the items expected within the defined scan envelope; and where the method preferably comprises
   iteratively modifying the frame length parameter based on a quantity of the items that respond to the low-level query.

**8.** The method of any one of the preceding claims, wherein determining the items expected within the defined scan envelope further comprises:

transmitting, from the mobile device and to a resource planning module, a parameter that describes the defined scan envelope;
generating, at the resource planning module, the high-level query, the high-level query further comprising the transmitted parameter;
performing the high-level query at the resource planning module; and
receiving, at the mobile device and from the resource planning module, a response to the high-level query, the response comprising the items expected within the defined scan envelope.

**9.** The method of any one of claims 1 to 7, wherein determining the items expected within the defined scan envelope further comprises:

performing the high-level query at the resource planning module;
iteratively receiving, at the mobile device and from the resource planning module, a response to the high-level query, the response comprising items expected within a plurality of locations;
determining, at the mobile reader and based on comparing the items expected within the plurality of locations with the defined scan envelope, the items expected within the defined scan envelope.

**10.** The method of any one of claims 1 to 7, wherein determining the items expected within the defined scan envelope further comprises:

transmitting, from the mobile reader to the resource planning module and based on receiving a request, data indicative of the defined scan envelope;
performing the high-level query at the resource planning module; and
receiving, at the mobile reader and based on performing the high-level query, data indicative of the items expected within the defined scan envelope.

**11.** The method of any one of claims 1 to 7, wherein determining the items expected within the defined scan envelope further comprises:

performing the high-level query at the resource planning module;
receiving, at the mobile reader and from the resource planning module and based on performing the high-level query, a list of items expected within a plurality of locations; and
determining, at the mobile reader and based on comparing the list of items expected within the plurality of locations with the defined scan envelope, the items expected within the defined scan envelope.

**12.** The method of any one of the preceding claims, further comprising
detecting an out-of-stock condition based on the output indicia; and/or
receiving, from a back-end enterprise resource planning system, an inventory list, wherein outputting the indicia of items that respond to the low-level query further comprises updating the inventory list with the indicia.

**13.** A computer program product, tangibly embodied in a machine-readable medium or in a data signal, the computer program product comprising instructions that, when read by a machine, operate to cause data processing apparatus to perform operations according to the method of any one of the preceding claims.

**14.** A system comprising:

a processor configured to:

define a scan envelope (112) of a mobile reader (102),
determine, based on performing a high-level query at a resource planning module, items (106a, 106b, 106c, 106d) expected within the defined scan envelope (112), and
generate a low-level query comprising a tuning parameter that selectively includes or excludes the determined items; and

an output module configured to:

transmit the low-level query via the mobile reader (102), and
output an indicia of items that respond to the low-level query.

**15.** The system of claim 14, further comprising a shopping cart (104) upon which the processor and output module are mounted.

FIG. 1A

FIG. 1B

| Item | Location | Timestamp |
|------|----------|-----------|
| ... | ... | ... |
| A | Shelf X | 2008-02-29-09:29 |
| B | Shelf X | 2008-02-29-09:30 |
| D | Shelf X | 2008-02-29-09:31 |
| ... | ... | ... |

FIG. 1C

FIG. 1D

| Item | Location | Timestamp |
|------|----------|-----------|
| ... | ... | ... |
| A | Shelf X | 2008-03-01-17:19 |
| B | Shelf X | 2008-03-01-17:20 |
| D | Shelf X | 2008-03-01-17:21 |
| ... | ... | ... |

FIG. 2A

FIG. 2B

FIG. 2C

FIG. 2D

300

FIG. 3

400

S402

Start

S404

Define a Scan Envelope of a Mobile Reader

S406

Determine, Based On Performing A High-Level Query At A Resource Planning Module, Items Expected Within the Defined Scan Envelope

S408

Generate a Low-Level Query Comprising a Tuning Parameter That Selectively Includes or Excludes the Determined Items

S410

Transmit the Low-Level Query Via the Mobile Reader

S412

Output an Indicia of Items That Respond to the Low-Level Query

S414

End

FIG. 4

FIG. 5

$600$

Single Tag Reply

$604$

Interrogator

| Select 608 | CW | Query 610 | CW | | Ack 612 | | CW | | QueryRep 614 |
|---|---|---|---|---|---|---|---|---|---|

QueryRep or
QueryAdjust if
EPC is valid

NAK 616

NAK if
EPC is invalid

$606$

Tag

RN16 618

PC + EPC + CRC16 620

$622$

$T_4$  $T_1$  $T_2$  $T_1$  $T_2$

$602$

FIG. 6

FIG. 7

FIG. 8

FIG. 9

Europäisches
Patentamt
European
Patent Office
Office européen
des brevets

**EUROPEAN SEARCH REPORT**

Application Number

EP 09 00 3490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/067492 A1 (AMITAY EINAT [IL] ET AL) 31 March 2005 (2005-03-31) * abstract * * figures 1,2 * * paragraphs [0002], [0012] - [0015], [0017] - [0020], [0022], [0023], [0027], [0028], [0030], [0032] - [0037] * * paragraphs [0040] - [0044], [0046] - [0050], [0057], [0059], [0061] - [0066] * ----- | 1-15 | INV. G06Q10/00 |
| Y | EPCGLOBAL INC.: "EPC Radio-Frequency Identity Protocols Class-1 Generation-2 UHF RFID Protocol for Communications at 860 MHz-960 MHz Version 1.1.0" EPC GLOBAL, [Online] 17 December 2005 (2005-12-17), pages 1-100, XP002531609 Retrieved from the Internet: URL:http://www.epcglobalinc.org/standards/ uhfc1g2/uhfc1g2_1_1_0-standard-20071017.pd f> [retrieved on 2009-09-10] * pages 43-45 * * pages 49-51 * * page 54 * * page 86 * * page 34 * ----- | 1-15 | |
| A | US 2007/008068 A1 (BRICE DAVID G [US] ET AL BRICE DAVID GEORGE [US] ET AL) 11 January 2007 (2007-01-11) * abstract * * paragraphs [0008], [0040] - [0043], [0049], [0054], [0056], [0070], [0075], [0097], [0098], [0100] - [0102], [0104], [0107] - [0109]; figures 5,15-18 * ----- | 1-15 | TECHNICAL FIELDS SEARCHED (IPC) G06Q |

The present search report has been drawn up for all claims

| Place of search | Date of completion of the search | Examiner |
|---|---|---|
| The Hague | 10 June 2009 | Lutz, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 00 3490

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2009

| Patent document cited in search report | | Publication date | Patent family member(s) | Publication date |
|---|---|---|---|---|
| US 2005067492 | A1 | 31-03-2005 | NONE | |
| US 2007008068 | A1 | 11-01-2007 | NONE | |

EPO FORM P0459

For more details about this annex : see Official Journal of the European Patent Office, No. 12/82